# EUROPEAN PATENT SPECIFICATION

(11) **EP 0 352 233 B1**
(45) Date of publication and mention of the grant of the patent: **29.09.1993**
(21) Application number: 89830141.1
(22) Date of filing: 31.03.1989
(51) Int. Cl.: A23G 3/20, A23G 3/02

(54) **Chain die assembly for making hard and stuffed sugar drops**
Prägestempelkette zur Herstellung von harten und gefüllten Zuckerbonbons
Chaîne de matrices d'estampage pour fabrication de bonbons durs ou fourrés

(30) Priority: 13.07.1988 IT 2135688
(43) Date of publication of application: 24.01.1990
(73) Proprietor: Rizzi, Francesco, I-24057 Martinengo (Bergamo) (IT)
(72) Inventor: Rizzi, Francesco, I-24057 Martinengo (Bergamo) (IT)
(74) Representative: Cicogna, Franco

(56) References cited:
- DE-C- 242 282
- DE-C- 255 052
- DE-C- 955 921
- FR-A- 626 784
- GB-A- 504 576

## Description

### BACKGROUND OF THE INVENTION

The present invention relates to a die for making hard and stuffed sugar drops in general.

As is known hard and stuffed sugar drops are conventionally made by means of suitable making apparatus in which a plurality of rotary hollow punch pairs is provided for forming the single sugar drops.

More specifically,these hollow punch pairs, which can be moved toward one another,are mounted on a top chain therewith there is tangentially engaged a bottom chain which supports corresponding cutting members.

Also known is the fact that these conventional sugar drop making machines are affected by several drawbacks,mainly occurring in adjusting the tension of the two chains,which negatively affects the obtained sugar drops.

These conventional sugar drop machine machines, moreover have a comparatively low making yield.

The document DE-C-242282 discloses a chain die assembly for making hard or solid and stuffed sugar drops comprising a frame supporting a top chain and a bottom chain, said bottom chain having contacting sliding portions of a sugar drop forming die assembly, said bottom chain supporting, at a central portion thereof, open seats along which the two portions can slide, said chains defining in turn a plurality of structures the corner portions (26) of which are adapted to cut the sugar drop forming sugar drop bead in cooperation.

Accordingly,the task of the present invention is to overcome the above mentioned drawbacks,by providing a chain die assembly,for making hard or solid and stuffed sugar drops,which,the rotary speed of the chains being the same,has a very high production rate.

Within the scope of this task,a main object of the present invention is to provide such a chain die assembly which is able of making perfectly even and finished sugar drops.

Another object of the present invention is to provide such a chain die assembly which is very reliable in operation.

According to one aspect of the present invention, the above mentioned task and objects,as well as yet other objects,which will become more apparent hereinafter,are achieved by a chain die assembly for making hard or solid and stuffed sugar drops, having the features of claim 1.

### BRIEF DESCRIPTION OF THE DRAWINGS

Further characteristics and advantages of the improved chain die assembly for making sugar drops according to the present invention will become more apparent from the following detailed description of a preferred embodiment thereof,which is illustrated, by way of an indicative but not limitative example in the figures of the accompanying drawings,in which:

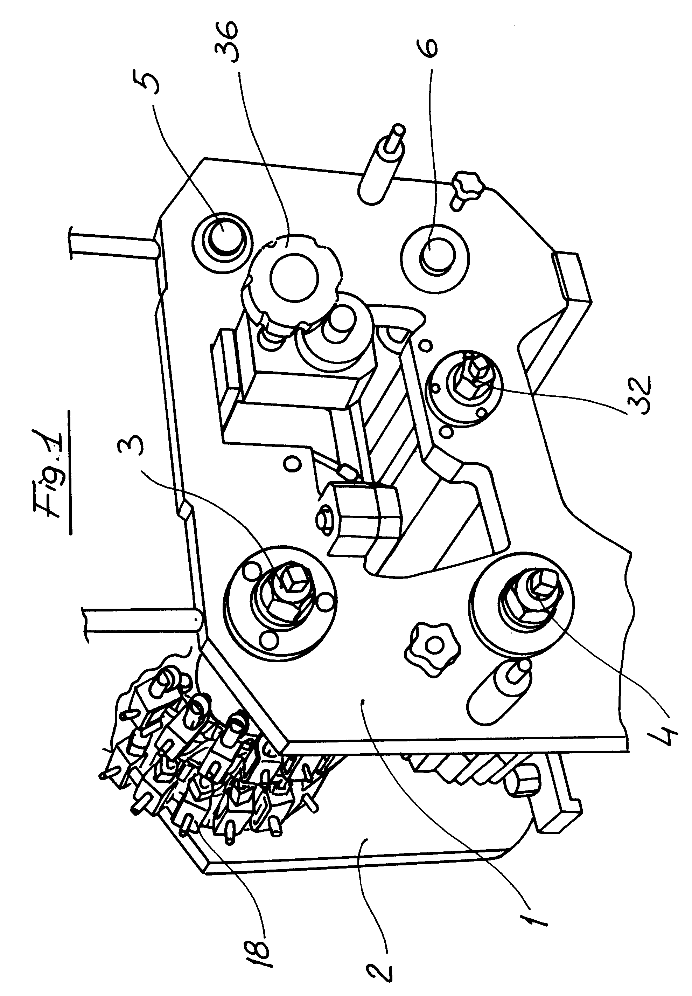

figure 1 is a schematic front perspective view illustrating the sugar drop forming die assembly according to the invention;

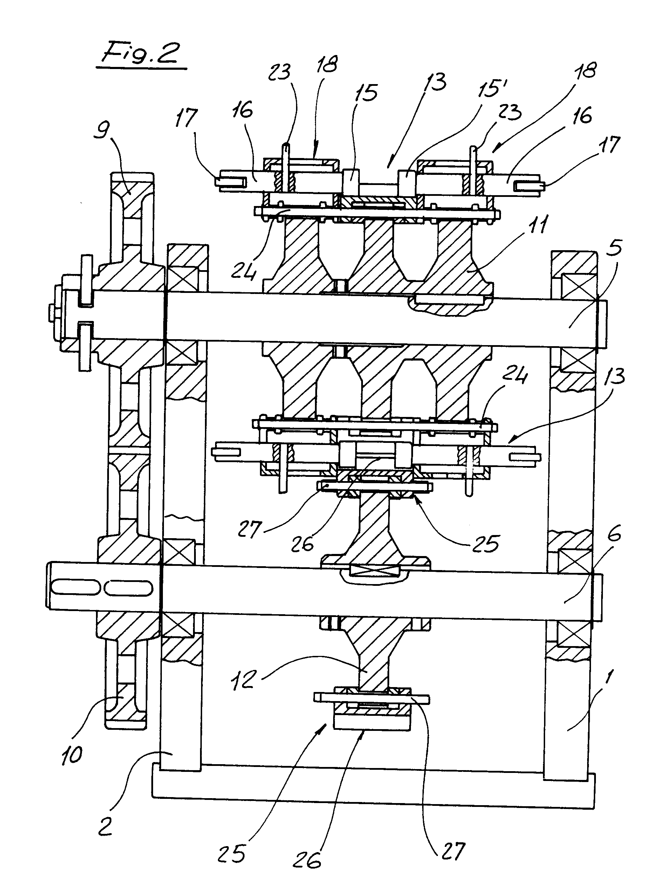

figure 2 is a cross sectional view of this die assembly, taken at the output shafts;

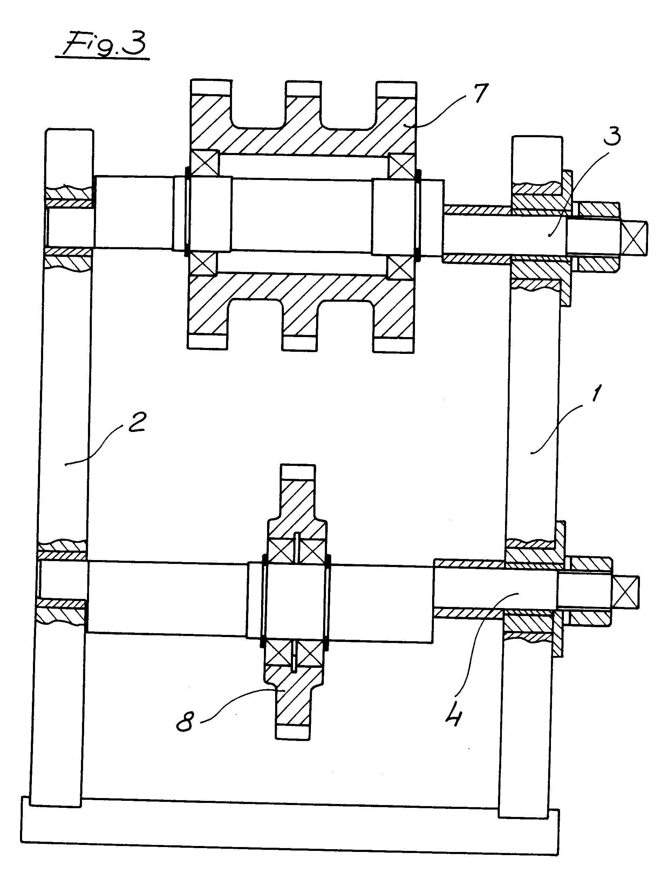

figure 3 is another cross-sectional view of the subject die assembly substantially taken at the inlet shafs or axes;

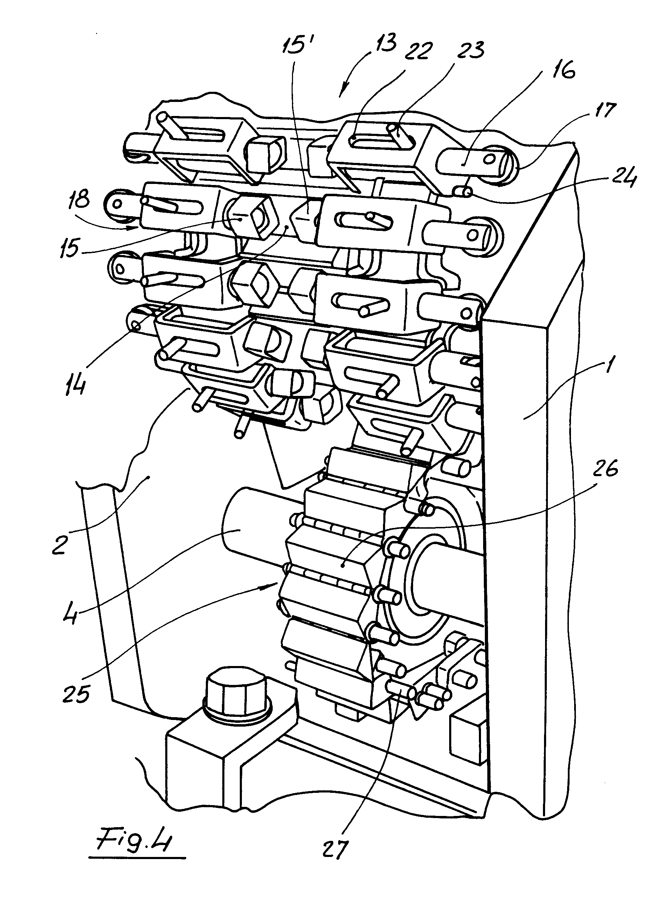

figure 4 is a side perspective view,in a partially broken away form,illustrating the subject die assembly;

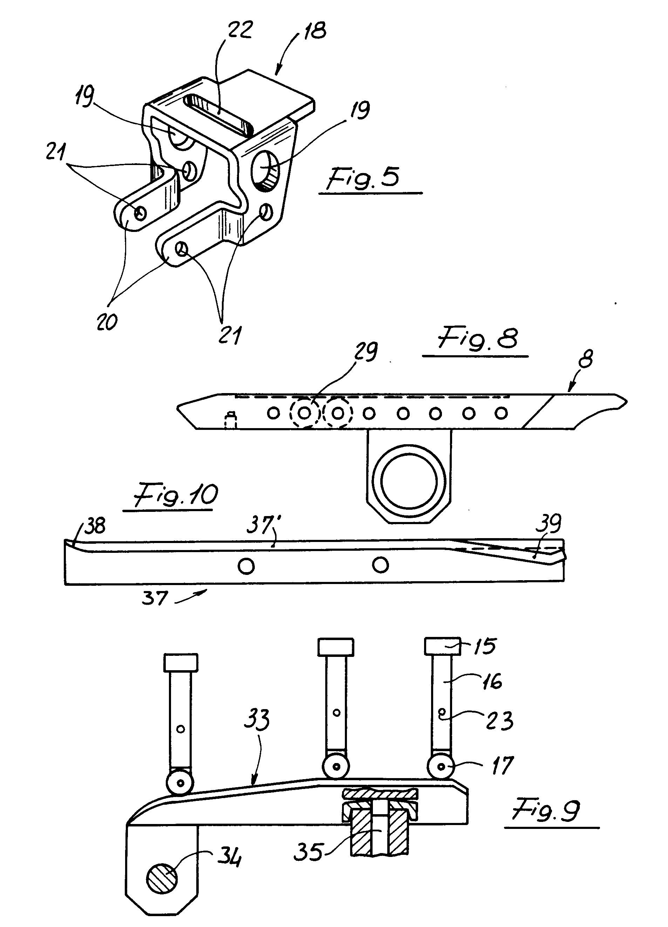

figure 5 illustrates a supporting member pivotably coupled to the two sides of the links of the top chain and to which the die half portions are coupled;
figures 6 and 7 illustrate a cam member acting on the top span of the bottom chain,for cutting the sugar bead;
figure 8 shows the profile of contour of the cam member;

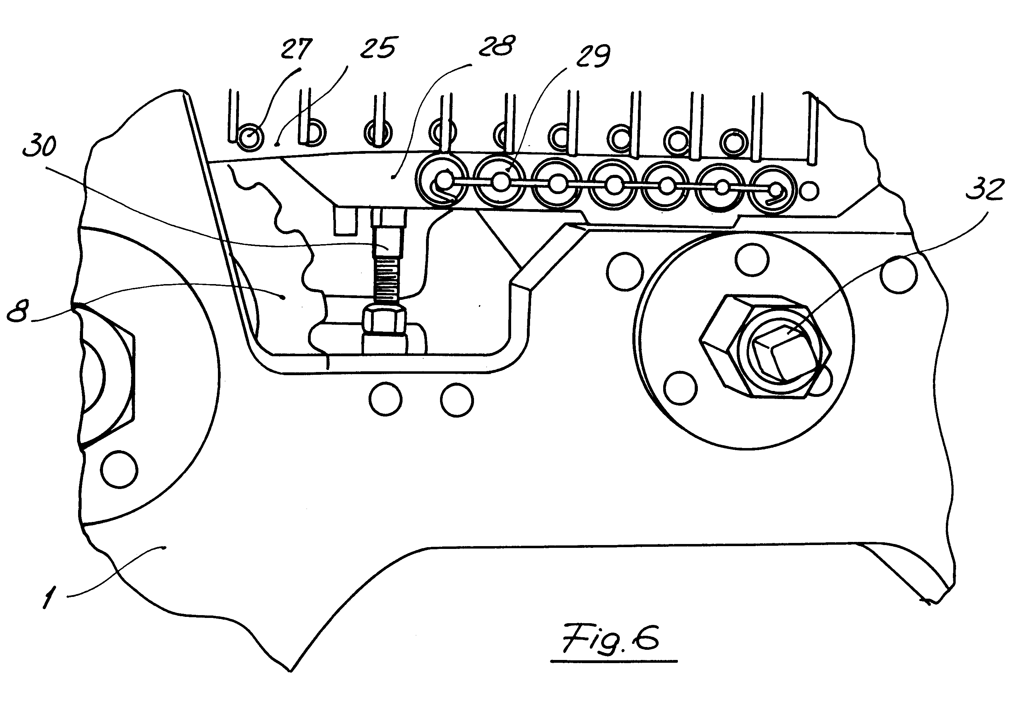

figure 9 schematically shows one of the cams for clamping the cooperating half die portion pairs; and

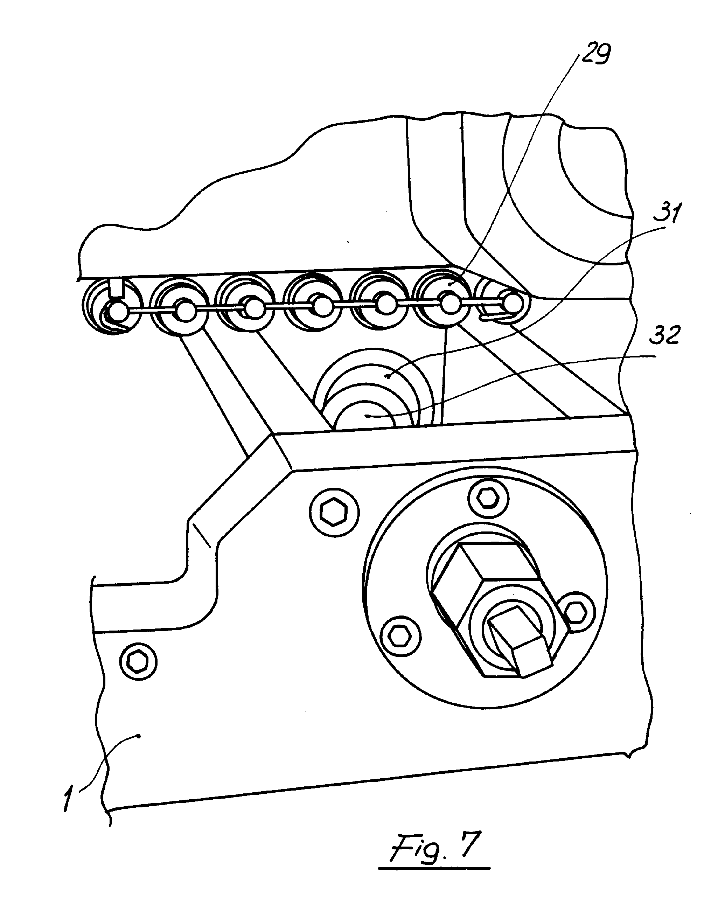

figure 10 shows one of the two cams for moving away the half portions of the die after the formation of a sugar drop.

### DESCRIPTION OF THE PREFERRED EMBODIMENT

With reference to the figures of the accompanying drawings,the chain die assembly for making sugar drops according to the present invention comprises an assemblable frame consisting of two shaped shoulders,respectively a front shoulder 1 and a rear shoulder 2,which supports,at one end thereof,two parallel axles 3 and 4,vertically extending,and,at the other end portions thereof,two small shafts or spindles 5 and 6 with the same arrangement as the axles.

On said axles,which are eccentrically arranged with respect to their supports,are idly mounted corresponding gear wheels,respectively of the three ring gear type 7 and one ring gear type 8.

On the shafts 5 and 6,which are coupled to one another by means of the gear members 9 and 10, one of which is a driven gear,the corresponding gear wheels 11 and 12 are rigid with said shafts.

In this connection it should be pointed out that the position of the top gear wheel 11,or driving gear wheel,on its shaft,can be suitably changed or adjusted,by mutually coupling the parts by means of pressing screws,for example,or the like operatively equivalent means.

Between the mentioned top gear wheels there is entrained a first chain,indicated overally at the reference number 13,which consists of a plurality of outer and inner links,of substantially known type,which are mutually coupled and define,by pairs,dihedral seats 14 therealong are able of sliding the two cooperating portions 15 and 15' of corresponding hollow dies.

These dies are mounted at one end of a respective rod 16,at the other end portion of which there is pivoted a small wheel 17.

Each rod is slidingly coupled to a small supporting member,indicated overally at the reference number 18,of substantially reversed bracket shape and provided at the two sides thereof,with holes 19 therethrough said rod is caused to pass.

Said supporting member is moreover provided with two bottom lugs 20 which extend perpendicularly to the sides of said supporting member,with a double bend,so that their end portions are arranged inside the mentioned sides.

At said end portions and the bottom portion of these sides,there are formed hole pairs 21,whereas on the top wall of the supporting member 18 there is formed a cross slot 22.

In this slot 22 there is engaged a pin 23 which is radially formed of the rod supporting the half die and is adapted to restrain the stroke of the latter in the two directions.

In this connection it should be pointed out that the small supporting members are arranged, by pairs,on the two sides of the links of the chain 13 and that they are mutually pivotably coupled to one another by means of pins 24.

On the bottom gear wheels 8 and 12 there is entrained a second chain 25 also consisting of inner and outer links defining operatively dihedral corners 26 and articulated by means of pins 27.

As these dihedral corners contact the corresponding corners of the first chain,or top chain,they will cut the cooked sugar bead or cord.

This cutting operation, in particular,will be facilitated by the provision of suitable bilateral pressing cams 28 which are mounted on tight or sealed ball bearings 29 to reduce to a minimum the operating friction.

More specifically,these cams are articulated at a respective end portion thereof on uprights consisting of threaded stems 30 and can be upwardly pushed by an eccentric mechanism 31 which can be actuated by an operator through an outer handwheel (not specifically shown) which is mounted at one end of the shaft or spindle 32.

Further bilateral or two-side cams 33 are provided,adapted to engage with the small wheels of the rods 16 in order to cause the half dies to move by pressure to one another in order to form subsequent sugar bead lenghts.

For adjusting the stroke of the mentioned rods,depending on the thickness of the sugar drops to be made,said cams,or forming cams, are pivoted at one end thereof to a vertical pivot pin 34 and are suitably inwardly displaced,in a timed manner,by means of a threaded spindle 35 which can be actuated by the operator through a handwheel 36.

As shown,downstream of the mentioned forming cams there are provided bilateral removing cams 37 which are arranged,as the above mentioned cams,inside the shoulders 1 and 2 for moving away from one another the two half dies 15 and 15'.

This withdrawing cams substantially consist of an angle element the vertical leg 37' of which is provided with a starting lead in portion 38 and an outward diverging portion 39 adapted to recover the rod pairs to their starting positions.

From the above disclosure it should be apparent that the invention fully achieves the intended task and objects.

While the invention has been disclosed and illustrated with reference to a preferred embodiment thereof,it should be apparent that the disclosed embodiment is susceptible to several modifications and variations all of which will come within the scope of the appended claims.

## Claims

1. A chain die assembly for making hard or solid and stuffed sugar drops comprising a frame supporting a top chain (13) and a bottom chain (25), entrained around gear wheels (7, 8, 11, 12) mounted on horizontal parallel axles (3, 4) and shafts (5, 6), respectively, said top chain (13) having contacting sliding portions (15, 15') of a sugar drop forming die assembly, said top chain (13) supporting, at a central portion thereof, dihedral structures defining open seats (14) along which the two portions (15, 15') can slide, said bottom chain (25) defining in turn a plurality of like dihedral structures the corner portions (26) of which are adapted to cut the sugar drop forming sugar drop bead in cooperation with the dihedral structures of the top chain (13), and cam means (28, 33, 37) for clamping the two portions of the die assembly, said frame including two shoulders (1, 2) supporting, at one end thereof, two parallel axles (3, 4) vertically displaced one above the other and, at the opposite end thereof, two parallel shafts (5, 6) vertically displaced one above the other, said axles (3, 4) idly support said gear wheels (7, 8), respectively of the three ring gear type (7) and the one ring gear type (8), said shafts (5, 6) have intermeshing gear members (9, 10) mounted thereon, one of which is driven, said axles (3, 4) supporting further said gear wheels (11, 12) the position of the driving top gear wheel (11) being adjustable, each portion (15, 15') of said die assembly, slidable on the links of the top chain (13), is mounted to one end of a rod (16) at the other end of which is a small wheel (17) engageable by the cam means (28, 23, 37), each rod (16) being slidably coupled to a supporting member (18) having a U shape whose sides are provided with holes (19) receiving said rod (16) and being arranged in pairs on both sides of the top chain (13).

2. A die assembly according to Claim 1, characterized in that said supporting member (18) is provided with two bottom lugs (20) perpendicularly extending with respect to the sides thereof, with a double bend, at said end portions and bottom portion of each side the lugs (20) being provided with a pair of holes (21), while on the top wall of said supporting member (18) there being formed a slot (22) for engaging a pin (23) of the die supporting rod and adapted to restrain the stroke of said rod in the two directions.

3. A die assembly according to Claim 2, characterized in that said supporting members (18) are pivotally coupled (24) to one another.

4. A die assembly according to Claim 1, characterized in that said bottom chain (25) is entrained around said bottom gear wheels (8, 12), said bottom chain (25) being also formed by inner and outer links pivotally coupled by pins (27) and defining dihedral cutting corners (26).

5. A die assembly according to one or more of the preceding claims, characterized in that the cam means comprises pressing cams (28) mounted on sealed ball bearings (29) and adapted to facilitate the sugar bead cutting, said cams being pivotally coupled, at one end thereof, on uprights consisting of threaded stems (30) and being adapted to be upwardly pushed by an eccentric mechanism (31) to be actuated by an operator through an outer handwheel.

6. A die assembly according to one or more of the preceding claims, characterized in that said half dies (15, 15') can be pressed toward one another by means of two-side cams (33) adapted to engage the small wheels of said rods (16), said cams (33) being pivoted at one end thereof on a vertical pivot pin (34) and being inwardly displaced by a threaded spindle (35) to be operated by the operator through a handwheel (36).

7. A die assembly according to one or more of the preceding claims, characterized in that downstream of said cams there are further provided removing two-side cams (37) for moving away from one another said half dies (15, 15'), said removing cams consisting essentially of an angle element the vertical leg (37) of which has a starting lead-in portion (38) and an outwardly diverging end portion (39).

## Patentansprüche

1. Prägestempelkette zur Herstellung von harten und gefüllten Zuckerbonbons, mit einem Rahmen, der eine obere Kette (13) und eine untere Kette (25) stützt, die um auf horizontalen parallelen Achen (3, 4) bzw. Wellen (5, 6) angebrachten Zahnräder (7, 8, 11, 12) mitgenommen werden, wobei die obengenannte obere Kette (13) mit Gleitkontaktportionen (15, 15') eines Prägestempels für Zuckerbonbons vorgesehen ist, wobei diese obere Kette (13) auf ihre mittlere Portion, V-winkeligen Strukturen stützt, die die offenen Sitze (14) bestimmen, derenentlang die zweien Portionen (15, 15') gleiten können, wobei die obengenannte untere Kette (25) ihrerseits mehreren gleichartigen V-winkeligen Strukturen bestimmt, deren Winkelportionen (26) mit der V-winkeligen Strukturen der oberen Kette (13) zum Schneiden des die Zuckerbonbons bildenden Giessen geeignet sind,
und mit Nockenmitteln (28, 33, 37) zum Klemmen der zweien Portionen des Prägestempels, wobei der obengenannte Rahmen mit zwei Schultern (1, 2) versehen ist, die auf ein ihren Enden, zwei parallelen senkrecht aufeinander angeordneten Achsen (3, 4) und auf das entgegengesetzte Ende zwei senkrecht aufeinander angeordneten parallelen Wellen (5, 6) stützen, wobei die obengenannten Achsen (3, 4) den obengenannte Zahnräder (7, 8) leerlaufend stützen, die der dreikränzigen Art (7) bzw. der einkränzigen Art (8) zugehören, wobei die obengenannten Wellen (5, 6) mit angebrachten ineinandergreifenden Zahnräder versehen sind, wo ein dieser Räder gesteuert ist, wobei die obengenannten Achsen (3, 4) ausserdem die obengenannten Zahnräder (11, 12) stützen, und die Stellung des oberen Steuerzahnrades (11) einstellbar ist, wobei jede Portion (15, 15') des obengenannten Prägestempels, die auf den Gelenke der oberen Kette (13) gleitbar ist, auf ein Ende einer Stange (16) angebracht wird, wobei auf das andere Ende dieser Stange ein kleines Rad (17) vorgesehen wird, das durch den Nockenmittel (28, 23, 37) eingreifbar ist, wobei jede Stange (16) mit einem Lagerelement (18) gleitend verbunden ist, das eine U-Form besitzt, deren Seiten mit Bohrungen (19) versehen sind, die die obengenannte Stange (16) aufnehmen und auf beiden Seiten der oberen Kette (13) paarweise angeordnet sind.

2. Prägestempel nach Anspruch 1, dadurch gekennzeichnet, dass das obengenannte Lagerelement (18) mit zwei unteren Vorsprünge (20) versehen sind, die zur Seiten des Lagerelementes mit zwei Biegungen senkrecht erstrecken sich, wobei auf die obengenannten Endportionen und Grundportion jeder Seite, die Vorsprünge (20) mit einem Paar Bohrungen (21) versehen sind, indem auf die obere Wand des obengenannten Lagerelementes (18) eine Schlitze (22) versehen ist, die zum Eingreifen eines Stiftes (23) der den Prägestempel stützende Stange gebildet ist und zum Begrenzen des Hubs der obengenannten Stange in beiden Richtungen geeignet ist.

3. Prägestempel nach Anspruch 2, dadurch gekennzeichnet, dass die obengenannten Lagerelemente (18) aneinander angelenkt verbunden (24) sind.

4. Prägestempel nach Anspruch 1, dadurch gekennzeichnet, dass die obengenannte untere Kette (25) um den obengenannten unteren Zahnräder (8, 12) geführt wird, wobei die obengenannte untere Kette (25) auch durch inneren und äusseren Gelenken gebildet wird, die durch Stifte (27) angelenkt verbunden ist und V-winkelige Schneidekante(26) bestimmt.

5. Prägestempel nach einem oder mehreren vorhergehenden Ansprüchen, dadurch gekennzeichnet, dass das Nockenmittel mit Drucknocken (28) versehen ist, die auf versiegelten Kugellagern (29) angebracht sind und zum Erleichtern des Zuckergiessenschneidens geeignet ist, wobei die obengenannten Nocken, an einem ihrer Enden, auf Ständern angelenkt verbunden sind, die auf gewindeten Spindeln (30) bestehen und durch einen ausserachsige Mechanismus (31) aufwärts gedruckt zu sein geeignet ist, somit dieser Mechanismus mittels eines äusseren Handgriffs aus einem Bedienungsmann betrieben werden kann.

6. Prägestempel nach einem oder mehreren vorhergehenden Ansprüchen, dadurch gekennzeichnet, dass die obengenannten halben Prägestempeln (15, 15') durch die zweiseiten Nocken (33) gegeneinander gedruckt werden können, wo diese Nocken zum Eingreifen der kleinen Rädern der obengenannten Stangen (16) geeignet sind, wobei die obengenannten Nocken (33) an einem Ende auf einen senkrechte Zapfen (34) angelenkt sind und durch eine Gewindespindel (35) innenwärts verschieben wird, somit sie mittels eines Handgriffs (36) aus dem Bedienungsmann betrieben werden kann.

7. Prägestempel nach einem oder mehreren vorhergehenden Ansprüchen, dadurch gekennzeichnet, dass stromabwärts der obengenannten Nocken, ausserdem, abnehmbaren zwei-seitigen Nocken (37) versehen sind, die zum aneinander Entfernen der obengenannten halben Prägestempel (15, 15') dienen, wobei die obengenannten Abnehmnocken wesentlich aus einem Winkelelement bestehen, dessen senkrechten Arm (37) eine Eintrittsportion (38) und eine aussenwärts auseinandergehende Endportion (39) weist auf.

## Revendications

1. Chaîne de matrices d'estampage pour la fabrication de bonbons durs ou fourrés, comprenant un cadre supportant une chaîne supérieure (13) et une chaîne inférieure (25), entraînées autour de roues dentées (7, 8, 11, 12) qui sont montées sur des essieux horizontaux parallèles (3, 4) et des fuseaux (5, 6) respectivement, ladite chaîne supérieure (13) présentant des portions coulissantes de contact (15, 15') d'un assemblage d'estampage pour former les bonbons, ladite chaîne supérieure (13) supportant, sur l'une de ses portions centrales, des structures dièdriques définant des sièges ouverts (14) le long desquels les deux portions (15, 15') peuvent coulisser, ladite chaîne de fond (25) définant à son tour une pluralité de structures dièdriques similaires dont les portions de coin (26) sont adaptées pour couper la coulée sucrée formant les gouttes de bonbon en coopération avec les structures dièdriques de la chaîne supérieure (13) et avec des moyens en forme de came (28, 33, 37) pour serrer les deux portions de la matrice d'estampage, ledit cadre comprenant deux épaulements (1, 2) supportant, sur l'une de leur extrémités, deux essieux parallèles (3, 4) qui sont déplacés en vertical l'un sur l'autre et, sur les extrémité opposée, deux arbres parallèles (5, 6) qui sont déplacés en vertical l'un sur l'autre, lesdits essieux (3, 4) supportant à vide lesdites roues dentées (7, 8) qui sont respectivement du type à trois couronnes (7) et du type à une couronne (8), lesdits arbres (5, 6) présentant des éléments (9, 10) engrenant et montés sur lesmêmes arbres, l'un desdits éléments engrenants étant commandé, lesdits essieux (3,4) supportant en outre lesdites roues dentées (11, 12), la position de la roue dentée supérieure de commande (11) pouvant être reglée, chaque portion (15, 15') de ladite matrice d'estampage, coulissant sur les articulations de la chaîne supérieure (13), est montée sur l'une extrémité d'une barre (16), sur l'autre extrémité de laquelle il y a une roue (17) petite qui peut être engagée par les éléments en forme de came (28, 23, 37), chaque barre (16) étant accouplée d'une manière coulissante avec un élément de support (18) en forme de U dont les côtés sont munis de trous (19) accueillant ladite barre (16) et étant arrangés en pairs sur les deux côtés de la chaîne supérieure (13).

2. Matrice d'estampage selon la revendication 1, caractérisée en ce que ledit élément de support (18) est muni de deux saillies de fond (20) s'étendant perpendiculairement aux côtés dudit élément, avec une courbure double, sur lesdites portions d'extrémité et ladite portion de fond de chaque côté les saillies (20) étant munis d'un pair de trous (21), tandis que sur la paroi supérieure dudit élément de support (18) il y étant formé une fissure (22) pour y engager un tourillon (23) de la barre de support de la matrice et qui est adaptée pour limiter la course de ladite barre dans les deux directions.

3. Matrice d'estampage selon la revendication 2, caractérisée en ce que lesdits éléments de support (18) sont accouplés pivotés (24) l'un l'autre.

4. Matrice d'estampage selon la revendication 1, caractérisée en ce que ladite chaîne de fond (25) est entraînée autour desdites roues dentées de fond (8, 12), ladite chaîne de fond (25) étant formée aussi par des articulations intérieures et extérieures qui sont accouplées pivotées par des tourillons (27) et définant des coins (26) dièdriques de coupe.

5. Matrice d'estampage selon l'une ou plusieurs des revendications précédentes, caractérisée en ce que les éléments en forme de came comprennent des cames de pression (28) qui sont montées sur des coussinets à billes scellés (29) et sont adaptées pour rendre plus facile la coupe de la goutte sucrée, lesdites cames étant accouplées pivotées, sur l'une de leur extrémités, sur des montants qui consistent de fuseaux filetés (30) et étant adaptés pour être poussés en haut par un mécanisme excentrique (31) en vue d'être actionnés par un opérateur au moyen d'une poignée extérieure.

6. Matrice d'estampage selon l'une ou plusieurs des revendications précédentes, caractérisée en ce que lesdites demi-matrices (15, 15') peuvent être pressées l'une envers de l'autre au moyen des cames (33) sur les deux côtés qui sont aptes à engager les roues petites desdites barres (16), lesdites cames (33) étant pivotées sur l'une de leur extrémités sur un pivot vertical (34) et étant déplacées à l'intérieur par un fuseau fileté (35) en vue d'être opérées par une poignée (36).

7. Matrice d'estampage selon l'une ou plusieurs des revendications précédentes, caractérisée en ce que en aval desdites cames il y a prévu en outre des cames (37) sur deux côtés pour éloigner l'une l'autre lesdites demi-matrices (15, 15'), lesdites cames d'enlèvement consistant essentiellement d'un élément angulaire dont le bras vertical (37) présente une portion d'entrée (38) et une portion (39) d'extrémité divergent à l'extérieur.
